# FASCICULE DE BREVET EUROPEEN

(11) **EP 2 772 735 B1**
(45) Date de publication et mention de la délivrance du brevet: **09.09.2020**
(21) Numéro de dépôt: 14156427.8
(22) Date de dépôt: 24.02.2014
(51) Int. Cl.: G01J 3/45

(54) **Dispositif et procédé d'adaptation dynamique de résolution spatiale pour spectromètres à transformée de fourier imageurs**
Vorrichtung und Verfahren zur dynamischen Adaptation der Raumauflösung für bildanzeigende Spektrometer mit Fourier-Transformation
Device and method for dynamically adapting spatial resolution for imaging Fourier transform spectrometers

(30) Priorité: 01.03.2013 FR 1300466
(43) Date de publication de la demande: 03.09.2014
(73) Titulaire: THALES, 92400 Courbevoie (FR)
(72) Inventeur: Gaucel, Jean-Michel, 06210 Mandelieu la Napoule (FR); Simeoni, Denis, 06150 Cannes-La-Bocca (FR); Mathieu, Sandrine, 06150 Cannes-La-Bocca (FR)
(74) Mandataire: Lopez, Frédérique

(56) Documents cités:
- US-A- 5 621 526
- US-B1- 7 259 861
- DENIS BLUMSTEIN ET AL: "<title>IASI instrument: technical overview and measured performances</title>", PROCEEDINGS OF SPIE, vol. 5543, 4 novembre 2004 (2004-11-04), pages 196-207, XP055089109, ISSN: 0277-786X, DOI: 10.1117/12.560907

## Description

### Domaine technique

La présente invention concerne un procédé et un dispositif d'adaptation dynamique de la résolution spatiale, notamment pour des dispositifs d'observation de la terre, et plus particulièrement pour des spectromètres à transformée de Fourier imageurs.

### Etat de la technique

Les documents Blumstein et al: " IASI instrument: technical overview and measured performances",PROCEEDINGS OF SPIE, vol. 5543, 4 novembre 2004 (2004-11-04), pages 196-207, XP055089109,ISSN: 0277-786X, DOI : 10.1117/12.560907, US 5,621,526 et US 7,259,861 B1 divulguent des spectromètres à transformée de Fourier pour l'observation météorologique satellitaire.

Un spectromètre à transformée de Fourier, communément désigné par le sigle « FTS » correspondant à la terminologie anglaise « Fourier Transform Spectrometer », est un instrument observant une scène avec une résolution spatiale - c'est-à-dire une taille de point de sondage - relativement basse et une résolution spectrale très fine. Il est typiquement couplé à un dispositif dit « imageur », travaillant en large bande spectrale, dont la résolution spatiale est plus fine. Le couplage du FTS avec un imageur a pour but d'améliorer la géolocalisation des données de l'instrument FTS.

A titre d'exemple, dans un satellite d'observation météorologique, le spectromètre à transformée de Fourier permet d'observer le spectre de la lumière dans le domaine infrarouge / proche infrarouge, et sa résolution spatiale peut être de l'ordre de 10 à 20 kilomètres. Le spectromètre à transformée de Fourier est couplé avec un imageur de résolution plus fine, de l'ordre du kilomètre.

Des spectromètres à transformée de Fourier connus comprennent un détecteur analogique disposé dans un plan pupille. Des spectromètres à transformée de Fourier plus récents - appelés FTS imageurs - comprennent, en remplacement du détecteur analogique, un détecteur matriciel placé dans un plan image qui décompose un point de sondage - représentant la résolution finale de l'instrument - en pixels élémentaires. Cette décomposition permet notamment d'effectuer une compensation numérique de l'effet du champ ou « auto-apodisation », ou encore de disposer, en plus du « mode FTS », d'un mode image, c'est-à-dire d'un mode permettant d'imager le champ de vue d'un point de sondage avec une résolution spatiale fine. Ce mode image peut remplacer l'« instrument imageur ». Les pixels physiques formant une telle matrice sont typiquement réalisés par la technologie communément désignée par le sigle CMOS correspondant à la terminologie anglaise « Complementary Métal Oxide Semiconductor », ou la technologie CCD correspondant à la terminologie anglaise « Charge-Coupled Device ». Afin d'optimiser le rapport signal sur bruit, la lecture du détecteur s'effectue avec des résolutions spatiales variables suivant le mode. Pour la suite, le terme « macro-pixel » désigne la résolution « numérique » du spectromètre à transformée de Fourier dans le « mode FTS », et le terme « super-pixel » désigne la résolution « numérique » dans le mode image. Un super-pixel peut être formé par un pixel physique de la matrice de détection, ou bien par un groupement de pixels physique, par exemple de 2x2 ou 3x3 pixels, suivant le besoin de résolution spatiale requise pour le mode image. Un macro-pixel définissant la résolution spatiale du mode FTS, est en pratique formé par une pluralité de pixels physiques de la matrice de détection, par exemple disposée suivant un alignement en une ou plusieurs lignes ou en une ou plusieurs colonnes de pixels physiques de la matrice, suivant la direction des franges interférométriques afin de conserver un contraste sur le signal modulé suffisant (>40%) au sein de chaque macro-pixel.

Le temps d'acquisition des données appelé « temps de pose », est décomposé, pour les spectromètres de type FTS imageurs, en un temps qui comprend une phase d'acquisition en mode FTS et une phase d'acquisition en mode image, la phase d'acquisition du mode FTS recouvrant de l'ordre de 98% du temps de pose.

Les données de FTS sont essentiellement utilisées pour étudier/surveiller la composition de l'atmosphère. Or l'exploitation des données dans cet objectif n'est possible qu'en scène claire, c'est-à-dire pour une scène observée sans nuage. Une scène considérée claire contient typiquement moins de 5% de nuage de la surface du point de sondage. Ainsi, si un point de sondage contient une proportion de nuages supérieure à une valeur seuil de l'ordre de 5%, les données sont peu exploitables par la communauté scientifique. Statistiquement seule une faible proportion des données acquises est en scène claire (<20%).

Il existe alors le besoin d'une solution qui palie à ces inconvénients. La présente invention vise à remédier aux limitations existantes en proposant un nouveau système d'adaptation dynamique de résolution spatiale pour spectromètres.

### Résumé de l'invention

Un but de l'invention est d'augmenter le taux d'exploitation des données en scène mixte (ciel partiellement nuageux).

Avantageusement, la présente invention s'applique à l'observation optique satellitaire et peut être utilisée notamment dans des satellites météorologiques d'observation.

Avantageusement, la présente invention permet d'améliorer le traitement de point de sondage acquis en scènes mixtes, c'est-à-dire en scènes claires et nuageuses.

Toujours avantageusement, la présente invention permet d'améliorer le traitement des points de sondage acquis en scène claire pour des zones d'observation hétérogènes telles que des sols mer et terre.

Ainsi, l'invention a pour objet un procédé d'adaptation de la résolution spatiale d'un spectromètre à transformée de Fourier (FTS) imageur pour l'observation météorologique satellitaire. Le procédé comprenant les étapes suivantes:
- acquisition de données en mode interférogramme et en mode image sur des points de sondage pour une scène observée, chaque point de sondage étant associé à une matrice de macro-pixels et défini par une pluralité de zones ;
- pour chaque point de sondage :
   - analyse à partir des données du mode image du contenu de chaque zone;
   - classification selon le résultat de l'analyse de chaque zone dans une classe de zone claire ou dans une classe de zone non claire ;
   - génération de données « pixel clair » à partir de la somme des données des macro-pixels de la classe de zone claire et de données « point de sondage » à partir de la somme des données de tous les macro-pixels de ladite matrice associée audit point de sondage; et
- transmission des données « point de sondage » et les données « pixel clair ».

Dans un aspect particulier, le procédé de l'invention comprend une étape de définition d'une pluralité de zones qui consiste à découper le point de sondage en des zones de géométrie égale.

Dans un aspect particulier de l'invention, l'étape d'analyse du contenu d'une zone consiste à déterminer la proportion de nuage dans la zone analysée.

Dans un aspect particulier de l'invention, une étape de compensation de l'effet du champ - appelé auto-apodisation - est appliquée aux macro-pixels du mode interférogramme.

Dans un aspect particulier de l'invention, une étape de correction radiométrique, spectrale ou géométrique est appliquée aux macro-pixels du mode interférogramme.

Dans un aspect particulier, l'invention comprend une étape pour déterminer si les points de sondage sont hétérogènes.

Dans un aspect particulier, l'étape de transmission consiste à transmettre un flux de données obtenu à partir de la somme des données de tous les macro-pixels si les points de sondage ne sont pas hétérogènes.

Dans un aspect particulier, l'invention comprend une étape de compression des données point de sondage et/ou des données « zone claire » avant l'étape de transmission.

L'invention a également pour objet un dispositif d'adaptation de la résolution spatiale d'un spectromètre à transformée de Fourier (FTS) imageur pour l'observation météorologique satellitaire, le dispositif comprenant :
- des moyens pour acquérir des données en mode interférogramme et en mode image sur des points de sondage pour une scène observée, chaque point de sondage étant associé à une matrice de macro-pixels et défini par une pluralité de zones ;
- pour chaque point de sondage :
   - des moyens pour analyser pour chaque point de sondage à partir des données du mode image le contenu de chaque zone;
   - des moyens pour classifier selon le résultat de l'analyse chaque zone dans une classe de zone claire ou dans une classe de zone non claire ;
   - des moyens pour générer des données « pixel clair » à partir de la somme des données des macro-pixels de la classe de zone claire et des données « point de sondage » à partir de la somme des données de tous les macro-pixels de ladite matrice associée audit point de sondage; et
- des moyens pour transmettre les données « point de sondage » et les données « pixel clair ».

L'invention a également pour objet un programme d'ordinateur pour exécuter les étapes du procédé de l'invention.

L'invention a aussi pour objet un produit programme d'ordinateur comprenant le programme d'ordinateur permettant d'exécuter les étapes du procédé de l'invention.

L'invention a également pour objet un instrument d'observation comportant un système d'adaptation dynamique de résolution spatiale selon l'invention.

### Description des figures

D'autres caractéristiques et avantages de l'invention apparaîtront à l'aide de la description qui suit faite en regard des dessins annexés où :
Les figures la et 1b, montrent des points de sondage selon le principe d'acquisition d'un FTS imageur;
La figure 2 illustre l'acquisition des données d'un FTS imageur pendant un temps de pose;
Les figures 3a et 3b, schématisent le découpage en zones égales d'un point de sondage dans deux modes d'implémentation;
Les figures 4a et 4b, schématisent le contenu des zones selon les deux modes d'implémentation des figures 3a et 3b ;
La figure 5 montre un synoptique du procédé de l'invention dans un mode de réalisation.

### Description détaillée de l'invention

Généralement, un satellite d'observation comporte une plateforme d'accueil sur laquelle est embarqué un module d'instrumentation. Le module d'instrumentation comporte un instrument de prise de vue, par exemple un instrument optique tel qu'un interféromètre à transformée de Fourier (FTS), qui collecte la lumière provenant d'une scène à observer, par exemple une région de la surface du globe terrestre ou une région de l'espace, laquelle traverse l'interféromètre puis est transmisse jusqu'à un système de détection permettant une mesure du flux lumineux.

La mesure du flux lumineux en sortie de l'interféromètre permet de caractériser différents paramètres tels que la concentration de certains gaz dans l'atmosphère en fonction de l'altitude par exemple.

Généralement, le champ de vue de l'instrument comporte une pluralité de points de mesure.

La figure la présente un schéma qui comporte neuf points de sondage (P0 à P8) dans le champ de vue de l'interféromètre. L'exemple de la figure la n'est pas limitatif dans le nombre et dans la localisation des points de sondage ; l'homme du métier appréciera que le principe de l'invention puisse s'appliquer à toute variante sur le nombre et la localisation des points de sondage.

L'effet « auto-apodisation » également appelé « effet du champ » engendre des franges d'interférences concentriques © comme représentées sur la figure la. Cet effet, s'il est présent, impose la décomposition du point de sondage en élément élémentaire appelé macro-pixel afin de conserver du contraste lorsque la différence de marche augmente et que les franges deviennent de plus en plus fines.

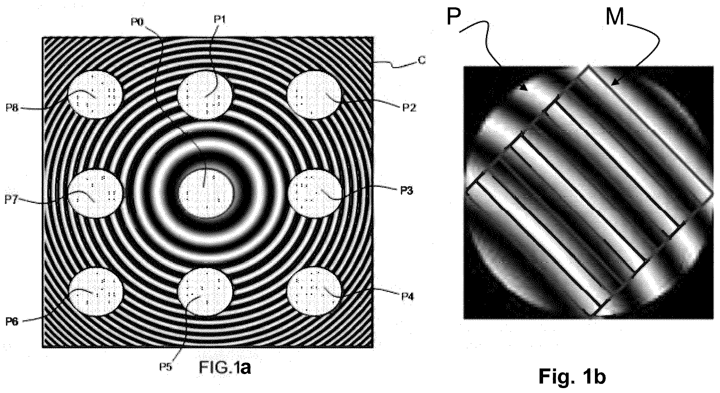

La figure 1b illustre de manière schématique une décomposition d'un point de sondage (P) en une matrice (M) de macro-pixels. Dans l'exemple choisi, les macro-pixels sont orientés suivant la direction des franges afin d'en limiter leur nombre tout en conservant un bon contraste. Dans cette configuration une largeur de macro-pixel de 0.55 franges à la différence de marche maximale permet de conserver un contraste supérieur à 40%.

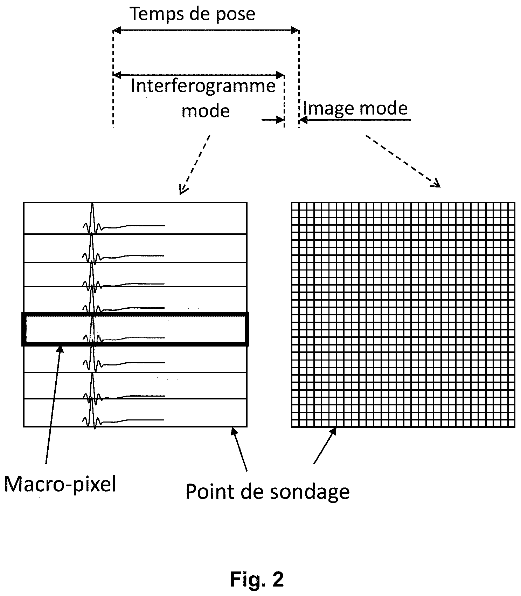

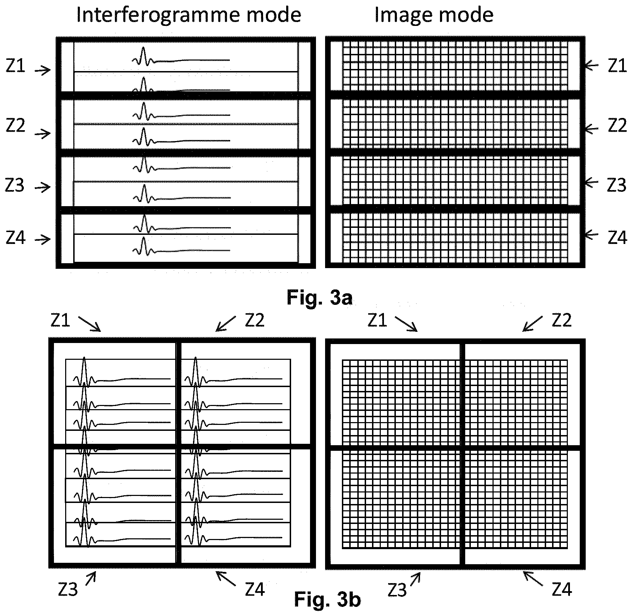

La figure 2 illustre les deux modes d'acquisition de données d'un FTS imageur pour un point de sondage. Pour une même scène, le temps de pose se décompose en une acquisition d'interférogrammes où l'on parle de mode FTS, et une acquisition d'images où l'on parle de mode image. Durant le mode image, la matrice de détection est lue à l'échelle du super-pixel. Durant le mode FTS la matrice est lue à l'échelle du macro-pixel. Dans l'exemple non-limitatif illustré par la figure 2, les macro-pixels sont formés par des regroupements de pixels par lignes, dans l'alignement des franges interférométriques. Cependant, ils pourraient dans d'autres exemples de réalisation être formés par des regroupements de pixels par colonnes, ou toute autre géométrie permettant soit de suivre au mieux l'imagerie des franges interférométriques sur la matrice de détection, soit d'améliorer le zonage du point de sondage (par exemple comme les 16 macro-pixels de la figure 3b), soit de simplifier la réalisation du détecteur.

Les figures 3a et 3b illustrent schématiquement un découpage en zones égales d'un point de sondage selon deux modes d'implémentation. Dans la figure 3a, le point de sondage est segmenté en quatre zones rectangulaires égales Z1 à Z4.

Dans la figure 3b, le point de sondage est segmenté en quatre zones carrées égales Z1 à Z4.

Dans une implémentation préférentielle, chaque zone est constituée d'un nombre entier de macro-pixels et l'ensemble des zones recouvre le point de sondage.

En effet, tout recouvrement entre zones doit être évité car il engendre des complications lors de la calibration radiométrique du signal.

Le choix des zones détermine la quantité statistique de zone claire qui va être obtenue. Plus les zones ont une surface petite plus la statistique zone claire est grande. Egalement plus les zones sont proches d'un cercle plus la statistique est grande.

Ainsi, statistiquement le choix d'une zone par macro-pixel est le mode préférentiel mais son implémentation doit être compatible avec le débit instrument.

Par exemple dans le cas de la figure 3a le choix de 4 zones est préférable car les macro-pixels sont très allongés et le gain n'est pas très important par rapport à une configuration à 8 zones. De plus petites zones pourraient conduire à dégrader la probabilité de bonne détection des zones claires et ainsi dégrader le taux effectif de zones claires utiles.

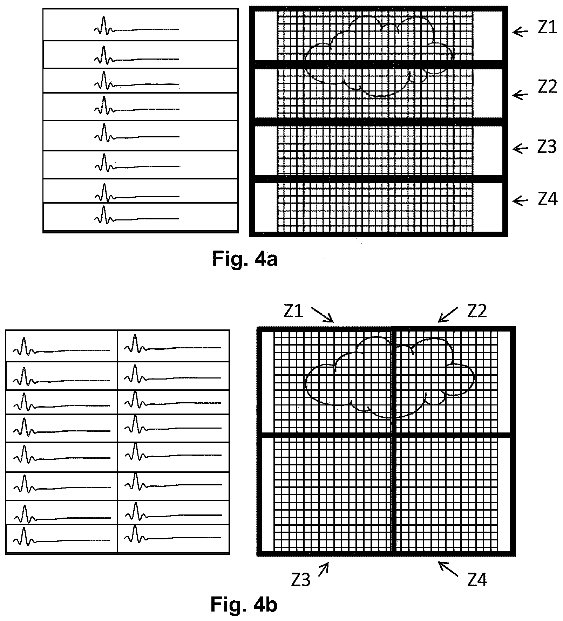

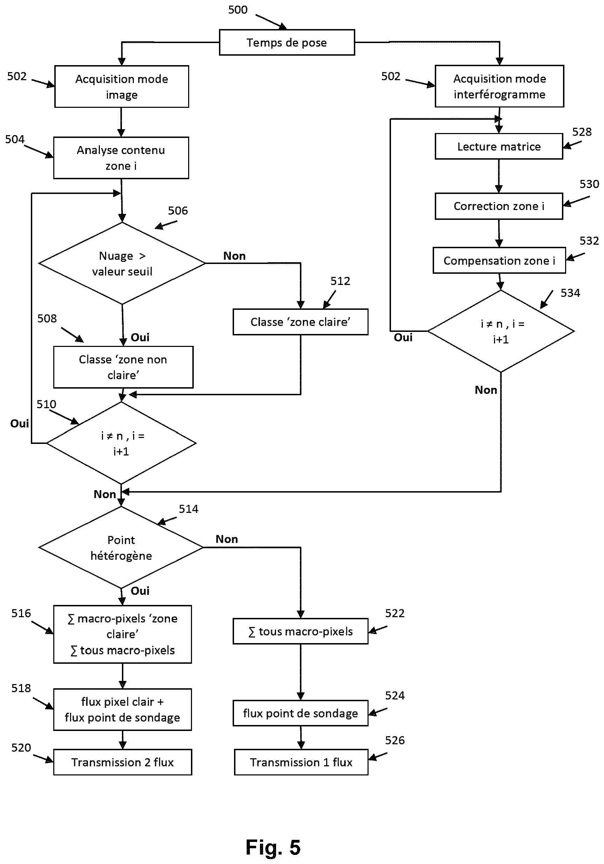

Les figures 4a et 4b illustrent schématiquement le contenu des zones selon les deux modes de découpage des figures 3a et 3b. A titre d'exemple non limitatif, la scène observée au point de sondage comprend des nuages dans deux zones du découpage, les zones Z1 et Z2. Les zones Z3 et Z4 ne contiennent respectivement pas de nuage. Tel qu'il est décrit plus bas en référence à la figure 5, chaque zone est analysée pour détecter la proportion de nuage afin de la classifier en zone nuageuse ou partiellement nuageuse, ou en zone claire sans nuage, et ainsi adapter la résolution spatiale des données transmises au sol.

La figure 5 décrit les étapes opérées par le procédé de l'invention dans un mode de réalisation. Le procédé débute à l'étape 500 durant un temps de pose, par l'acquisition des données (502) en mode interférogramme et en mode image d'une même scène. Comme décrit précédemment, chaque point de sondage est associé à une matrice de macro-pixels du mode interférogramme et est défini par un découpage en 'n' zones. Il est à noté que le choix du découpage en 'n' zones est de manière préférentielle défini lors de la phase de design de l'instrument.

Dans une étape suivante 504, le contenu de chaque zone est analysé, puis une détermination est faite à l'étape 506 pour détecter la proportion de nuages dans la zone analysée. Si la zone contient une proportion de nuages supérieure à une valeur seuil alors elle est classifiée en « zone non claire » à l'étape 508 et le procédé poursuit l'analyse du contenu de la zone suivante 510. Si la zone ne contient pas de nuages ou que la proportion est inférieure à la valeur seuil, la zone est classifiée en « zone claire » à l'étape 512, et le procédé poursuit l'analyse du contenu e la zone suivante par l'étape 510.

Quand toutes les zones ont été analysées, le procédé continue à l'étape 514 où un test est fait pour déterminer s'il existe des zones claires et des zones non-claires, c'est-à-dire déterminer si le point de sondage est hétérogène.

Si le point de sondage est hétérogène, le procédé poursuit à l'étape 516, où les macro-pixels correspondants aux zones classifiées en « zone claire » sont sommés (adaptation de la résolution spatiale), et où tous les macro-pixels correspondants à l'ensemble des zones claires et non-claires sont sommés.

A l'étape suivante 518, un flux de données « zone claire » est généré, et un flux de données « point de sondage » est généré. Les deux flux de données peuvent être transmis à l'étape suivante 520. L'homme de l'art appréciera que les flux peuvent être compressés avant leur transmission.

Si lors de l'étape 514, le procédé détermine que le point de sondage est homogène, c'est-à-dire que toutes les zones sont classifiées comme appartenant à une même seule classe, le procédé poursuit à l'étape 522 où tous les macro-pixels correspondants à la zone unique sont sommés. A l'étape suivante 524, un flux de données « point de sondage » est généré. Le flux de données peut être transmis à l'étape suivante 526. L'homme de l'art appréciera que le flux peut être compressé avant sa transmission.

Les données compressées peuvent être transmises vers le sol par des moyens de radio-transmission lorsque le satellite se trouve en visibilité d'une station de contrôle au sol.

Dans un procédé parallèle, la matrice de macro-pixels acquise en mode interférogramme à l'étape 502 est lue à l'étape 528. Des traitements optionnels de type correction radiométrique, spectrale ou géométrique peuvent être appliqués à l'étape 530 par zone. Une compensation de champ peut être appliquée dans une étape suivante 532, avec une sommation des macro-pixels à l'intérieur de chaque zone. Le procédé reboucle (534) pour lire toutes les zones de la matrice. Quand toutes les zones sont lues, et de manière optionnelle traitées, le procédé poursuit à l'étape 514.

Ainsi la présente invention permet d'exploiter les données du mode image pour générer des données additionnelles qui peuvent être transmises en plus des données issues de la lecture des interférogrammes.

La présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en gardant les mêmes principes.

La présente invention permet d'augmenter significativement la quantité de points de sondage clairs d'un FTS imageur tout en ayant de faibles contraintes de réalisation.

La présente invention peut s'implémenter à partir d'éléments matériel et/ou logiciel. Le présent procédé peut être implémenté en software dans un micro processeur par exemple de type LEON, POWERPC ou DSP21020, ou en hardware en utilisant une technologie de type FPGA ou ASIC. Une partie de l'invention peut être disponible en tant que produit programme d'ordinateur sur un support lisible par ordinateur. Le support peut être électronique, magnétique, optique, électromagnétique ou être un support de diffusion de type infrarouge. De tells supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Un procédé pour adapter la résolution d'un spectromètre à transformée de Fourier (FTS) imageur pour l'observation météorologique satellitaire, le procédé comprenant les étapes suivantes:
- acquisition (502) de données en mode interférogramme et en mode image sur des points de sondage pour une scène observée, chaque point de sondage (P) étant associé à une matrice de macro-pixels (M) et défini par une pluralité de zones (Z);
- pour chaque point de sondage :
- analyse (504) à partir des données du mode image du contenu de chaque zone;
- classification (506,508,510,512) selon le résultat de l'analyse, de chaque zone dans une classe de zone claire ou dans une classe de zone non claire ;
- pour chaque point de sondage ayant des zones claires et des zones non-claires :
- sommer (516) les données des macro-pixels de la classe de zone claire pour générer (518) un flux de données « pixel clair » et sommer (516) les données de tous les macro-pixels de ladite matrice de macro-pixels (M) associée audit point de sondage pour générer (518) un flux de données « point de sondage » ; et
- transmettre (520) les deux flux de données.

2. Le procédé selon la revendication 1 comprenant en outre une étape préliminaire de définition d'une pluralité de zones qui consiste à découper le point de sondage en des zones de géométrie égale.

3. Le procédé selon la revendication 1 ou 2 dans lequel l'étape d'analyse du contenu d'une zone consiste à déterminer la proportion de nuage dans la zone analysée.

4. Le procédé selon l'une quelconque des revendications 1 à 3 comprenant en outre une étape (532) de compensation de champ appliquée aux macro-pixels du mode interférogramme.

5. Le procédé selon l'une quelconque des revendications 1 à 4 comprenant en outre une étape (530) de correction radiométrique, spectrale ou géométrique appliquée aux macro-pixels du mode interférogramme.

6. Le procédé selon l'une quelconque des revendications 1 à 5 comprenant en outre une étape (514) de détermination si les points de sondage sont hétérogènes.

7. Le procédé selon la revendication 6 où l'étape de transmission consiste à transmettre (526) un flux de données obtenu à partir de la somme des données de tous les macro-pixels si les points de sondage ne sont pas hétérogènes.

8. Le procédé selon l'une quelconque des revendications 1 à 7 comprenant de plus une étape de compression des données avant l'étape de transmission.

9. Un dispositif d'adaptation de la résolution spatiale d'un spectromètre à transformée de Fourier (FTS) imageur pour l'observation météorologique satellitaire, le dispositif comprenant : des moyens pour acquérir des données en mode interférogramme et en mode image sur des points de sondage pour une scène observée, chaque point de sondage étant associé à une matrice de macro-pixels et défini par une pluralité de zones ; pour chaque point de sondage : des moyens pour analyser pour chaque point de sondage à partir des données du mode image le contenu de chaque zone; des moyens pour classifier selon le résultat de l'analyse chaque zone dans une classe de zone claire ou dans une classe de zone non claire ; des moyens pour générer des données « pixel clair » à partir de la somme des données des macro-pixels de la classe de zone claire et des données « point de sondage » à partir de la somme des données de tous les macro-pixels de ladite matrice associée audit point de sondage; et des moyens pour transmettre les données « point de sondage » et les données « pixel clair ».

10. Un instrument d'observation comportant un dispositif d'adaptation de la résolution d'un spectromètre à transformée de Fourier imageur selon la revendication 9.

## Patentansprüche

1. Verfahren zur Adaption der Auflösung eines bildgebenden Spektrometers mit Fourier-Transformation (FTS) zur meteorologischen Satellitenbeobachtung, wobei das Verfahren folgende Schritte umfasst:
- Erfassen (502) von Daten im Interferogramm-Modus und im Bildmodus an Sondierungspunkten einer beobachteten Szene, wobei jeder Sondierungspunkt (P) einer Makropixel-Matrix (M) zugeordnet ist und durch eine Vielzahl von Bereichen (Z) definiert ist;
- für jeden Sondierungspunkt:
- Analyse (504), anhand der Daten des Bildmodus, des Inhaltes eines jeden Bereichs;
- Klassifizierung (506, 508, 510, 512) entsprechend dem Ergebnis der Analyse, eines jeden Bereichs in eine klare Bereichsklasse oder in eine unklare Bereichsklasse;
- für jeden Sondierungspunkt, welcher klare und unklare Bereiche aufweist:
- Summieren (516) der Daten der Makropixel der klaren Bereichsklasse zum Erzeugen (518) eines "klaren Pixel"- Datenstroms und Summieren (516) der Daten aller Makropixel der dem Sondierungspunkt zugeordneten Makropixel-Matrix (M) zum Erzeugen (518) eines "Sondierungspunkt"-Datenstroms ; und
- Übertragen (520) der beiden Datenströme.

2. Verfahren nach Anspruch 1, ferner umfassend einen vorbereitenden Schritt der Definition einer Vielzahl von Bereichen, welcher darin besteht, den Sondierungspunkt in Bereiche gleicher Geometrie zu zerschneiden.

3. Verfahren nach Anspruch 1 oder 2, wobei der Schritt des Analysierens des Inhaltes eines Bereichs darin besteht, den Wolkenanteil in dem analysierten Bereich zu bestimmen.

4. Verfahren nach einem der Ansprüche 1 bis 3, ferner umfassend einen Schritt (532) der Feldkompensation, welche auf die Makropixel des Interferogramm-Modus angewandt wird.

5. Verfahren nach einem der Ansprüche 1 bis 4, ferner umfassend einen Schritt (530) der radiometrischen, spektralen oder geometrischen Korrektur, welche auf die Makropixel des Interferogramm-Modus angewandt wird.

6. Verfahren nach einem der Ansprüche 1 bis 5, fener umfassend einen Schritt (514) der Bestimmung, ob die Sondierungspunkte heterogen sind.

7. Verfahren nach Anspruch 6, wobei der Schritt der Übertragung darin besteht, einen anhand der Summe der Daten aller Makropixel erzielten Datenstrom zu übertragen (526), wenn die Sondierungspunkte nicht heterogen sind.

8. Verfahren nach einem der Ansprüche 1 bis 7, zudem umfassend einen Schritt der Kompression der Daten vor dem Schritt der Übertragung.

9. Vorrichtung zur Adaption der Raumauflösung eines bildgebenden Spektrometers mit Fourier-Transformation (FTS) zur meteorologischen Satellitenbeobachtung, wobei die Vorrichtung Folgendes umfasst: Mittel zum Erfassen von Daten im Interferogramm-Modus und im Bildmodus an Sondierungspunkten einer beobachteten Szene, wobei jeder Sondierungspunkt einer Makropixel-Matrix zugeordnet ist und durch eine Vielzahl von Bereichen definiert ist; für jeden Sondierungspunkt: Mittel zur Analyse, für jeden Sondierungspunkt, anhand der Daten des Bildmodus, des Inhaltes eines jeden Bereichs; Mittel zur Klassifizierung entsprechend dem Ergebnis der Analyse, eines jeden Bereichs in eine klaren Bereichsklasse oder in eine unklare Bereichsklasse; Mittel zum Erzeugen von "klaren Pixel"-Daten anhand der Summe der Daten der Makropixel der klaren Bereichsklasse und von "Sondierungspunkt"-Daten anhand der Summe der Daten aller Makropixel der dem Sondierungspunkt zugeordneten Matrix; und Mittel zum Übertragen der "Sondierungspunkt"-Daten und der "klaren Pixel"-Daten .

10. Beobachtungsinstrument, umfassend eine Vorrichtung zur Adaption der Auflösung eines bildgebenden Spektrometers mit Fourier-Transformation nach Anspruch 9.

## Claims

1. Method for adapting the resolution of an imager Fourier transform spectrometer (FTS) for satellite meteorological observation, the method comprising the following steps:
- acquisition (502) of data in interferogram mode and in image mode on survey points for an observed scene, each survey point (P) being associated a matrix of macro-pixels (M) and defined by a plurality of zones (Z);
- for each survey point:
- analysis (504) on the basis of the data of the image mode of the content of each zone;
- classification (506, 508, 510, 512) according to the result of the analysis, of each zone into a clear zone class or into a non-clear zone class;
- for each survey point having clear zones and non-clear zones:
- summing (516) the data of the macro-pixels of the clear zone class to generate (518) a "clear pixel" data stream and summing (516) the data of all the macro-pixels of the said matrix of macro-pixels (M) associated with the said survey point to generate (518) a "survey point" data stream; and
- transmitting (520) the two data streams.

2. Method according to Claim 1 further comprising a preliminary step of defining a plurality of zones which consists in splitting the survey point into zones of equal geometry.

3. Method according to Claim 1 or 2 wherein the step of analyzing the content of a zone consists in determining the proportion of cloud in the analysed zone.

4. Method according to any one of Claims 1 to 3 further comprising a step (532) of field compensation applied to the macro-pixels of the interferogram mode.

5. Method according to any one of Claims 1 to 4 further comprising a step (530) of radiometric, spectral or geometric correction applied to the macro-pixels of the interferogram mode.

6. Method according to any one of Claims 1 to 5 further comprising a step (514) of determining whether the survey points are heterogeneous.

7. Method according to Claim 6, wherein the transmission step consists in transmitting (526) a data stream obtained on the basis of the sum of the data of all the macro-pixels if the survey points are not heterogeneous.

8. Method according to any one of Claims 1 to 7 further comprising a step of compressing the data before the transmission step.

9. A device for adapting the spatial resolution of an imager Fourier transform spectrometer (FTS) for satellite meteorological observation, the device comprising: means for acquiring data in interferogram mode and in image mode on survey points for an observed scene, each survey point being associated with a matrix of macro-pixels and defined by a plurality of zones; for each survey point: means for analyzing for each survey point from the image mode data the content of each zone; means for classifying, according to the result of the analysis, each zone in a clear zone class or in a non-clear zone class; means for generating "clear pixel" data from the sum of the data of the clear zone classmacro pixels and of the "survey point" data from the sum of the data of all the macro pixels of said matrix associated with said survey point; and means for transmitting the "survey point" data and the "clear pixel" data

10. Observation instrument comprising a device for adapting the resolution of an imager Fourier transform spectrometer according to Claim 9.
